# EUROPÄISCHE PATENTSCHRIFT

(11) **EP 3 350 031 B1**
(45) Veröffentlichungstag und Bekanntmachung des Hinweises auf die Patenterteilung: **07.10.2020**
(21) Anmeldenummer: 16793796.0
(22) Anmeldetag: 02.11.2016
(51) Int. Cl.: B60R 25/24, B60R 25/40, G07C 9/00

(54) **VERFAHREN ZUM BETREIBEN EINES FAHRZEUGZUGANGSSYSTEMS**
METHOD FOR OPERATING A VEHICLE ACCESS SYSTEM
PROCÉDÉ PERMETTANT DE FAIRE FONCTIONNER UN SYSTÈME D'ACCÈS À UN VÉHICULE

(30) Priorität: 23.12.2015 DE 102015122771
(43) Veröffentlichungstag der Anmeldung: 25.07.2018
(73) Patentinhaber: Huf Hülsbeck & Fürst GmbH & Co. KG, 42551 Velbert (DE)
(72) Erfinder: WITTE, Martin, 48683 Ahaus (DE); VAN GASTEL, Peter, 42699 Solingen (DE)
(74) Vertreter: Zenz Patentanwälte Partnerschaft mbB
(86) Internationale Anmeldenummer: PCT/EP2016/076325
(87) Internationale Veröffentlichungsnummer: WO 2017/108239

(56) Entgegenhaltungen:
- WO-A1-2007/134675
- WO-A1-2011/026763
- DE-A1-102012 017 393
- JP-A- 2012 172 367
- US-B1- 6 323 566
- US-B2- 8 629 763

## Beschreibung

Die Erfindung betrifft ein Verfahren zum Betreiben eines passiven Fahrzeugzugangssystems.

Im Stand der Technik sind verschiedene passive Fahrzeugzugangssysteme bekannt, insbesondere sogenannte Keyless-Entry-Systeme und Keyless-Go-Systeme.

Das erstgenannte System macht aktive Schließvorgänge am Fahrzeug für einen Zugang in den Innenraum unnötig. Stattdessen trägt der Fahrzeugbenutzer einen Funkschlüssel (auch als ID-Geber bezeichnet) mit sich und ein drahtloser Funkdialog zwischen Fahrzeug und Funkschlüssel legitimiert dann den Benutzer eine Fahrzeugtür zu öffnen.

Ein Beispiel für eine Vorrichtung zum automatischen Betätigen eines Schließelements eines Kraftfahrzeugs ist der DE 10 2012 017 393 A1 zu entnehmen.

Bei diesen Systemen ist grundsätzlich zwischen zwei Systemausbildungen zu unterscheiden, nämlich den pollenden (oder abfragenden) Systemen und den getriggerten Systemen. Die getriggerten Systeme erfordern ein detektierbares Ereignis, um den Dialog mit dem Funkschlüssel auszulösen. Ein solches Trigger-Ereignis kann beispielsweise die Annäherung der Hand an einen Fahrzeugtürgriff sein, sofern der Fahrzeugtürgriff über Annäherungssensoren zur Detektion dieser Annäherung verfügt.

Die Erfindung betrifft jedoch ausschließlich den Bereich der sogenannten pollenden Systeme. Derartige pollende Systeme fragen über niederfrequente Signale vom Fahrzeug aus die Umgebung ab. Dies geschieht, indem im niederfrequenten Bereich wiederholt, beispielsweise zyklisch, Wecksignale ausgesandt werden. Befindet sich ein Funkschlüssel (Funkschlüssel) mit einem geeigneten Transponder in der näheren Umgebung des Fahrzeuges, so bewirken diese Wecksignale ein Aufwecken des Funkschlüssels, der nachfolgend eine Kommunikation im hochfrequenten Bereich mit dem Fahrzeug initiiert. Die Fahrzeuge verfügen also in diesen Systemen sowohl über eine Einrichtung zum Senden von niederfrequenten Signalen (manchmal als LF-Initiator bezeichnet) sowie eine Kommunikationseinrichtung für eine Hochfrequenzkommunikation.

Der Funkschlüssel verfügt seinerseits über eine Empfangseinrichtung für den Empfang der niederfrequenten Wecksignale und ebenfalls über eine Sendeempfangseinrichtung für eine hochfrequente Kommunikation.

Zum Aussenden der niederfrequenten Wecksignale sind am Fahrzeug eine oder mehrere Antennenspulen angeordnet, welche die Aussendung in den Umkreis des Fahrzeuges erlauben.

Ein Beispiel für eine derartige Einrichtung ist in der US 6,323,566 B1 beschrieben. Die Funktion des Weckmusters und die entsprechende technische Gestaltung sind beispielsweise der US 8,629,763 zu entnehmen.

Zusätzlich zu dem Dialog zwischen Funkschlüssel und Fahrzeug kann es bei den bekannten pollenden Systemen vorgesehen sein, am Fahrzeug Sensoreinrichtungen anzuordnen, die den Zugangswunsch des Bedieners oder Benutzers des Fahrzeuges zu einer Fahrzeugtür erfassen. Dies können beispielsweise die bereits oben beschriebenen kapazitiven Annäherungssensoren oder beliebige anderer Arten von Sensoren sein.

Nachteilig an den beschriebenen pollenden Systemen ist der Energiebedarf, da die Umgebung zyklisch oder wiederholt abgefragt wird und die Sensoreinrichtungen am Fahrzeug außerdem gespeist werden.

Aufgabe dieser Erfindung ist es, ein verbessertes Betriebsverfahren für passive Zugangssysteme mit zyklischer Abfrage zur Verfügung zu stellen.

Nach dem erfindungsgemäßen Verfahren wird ein System genutzt, bei dem am Fahrzeug eine Fahrzeug-Sendeeinrichtung zum Aussenden drahtloser niederfrequenter elektromagnetischer Signale vorgesehen ist. Diese Einrichtung sendet ein sogenanntes Polling-Signal oder auch Abfragesignal aus und wird in einigen Systemen als LF-Initiator bezeichnet. Als Frequenzbereich für die niederfrequenten elektromagnetischen Signale ist üblicherweise ein Bereich von 30 kHz bis 150 kHz vorgesehen. Gängige Systeme nutzen z.B. die Frequenz um 125 kHz.

Außerdem weist das System für den Einsatz des erfindungsgemäßen Verfahrens auf Fahrzeugseite eine Fahrzeug-Sende-Empfangseinrichtung für drahtlose hochfrequente elektromagnetische Signale auf. Dieses System dient der bidirektionalen Kommunikation mit dem mobilen Funkschlüssel. Die hochfrequente Kommunikation findet im Bereich einiger 100 MHz, zum Beispiel bei 430 MHZ statt.

Ein mobiler Funkschlüssel, den der Benutzer mit sich führt hat eine Schlüssel-Empfangseinrichtung für die genannten niederfrequenten Signale. Dazu weist der Funkschlüssel beispielweise eine Drei-Achsen-Spulenanordnung (3D-Spule) zum Empfang der Signale unabhängig von der Lage des Funkschlüssels im Rauf auf. Mit der Empfangsspulenanordnung ist ein System zum Aufwecken der weiteren elektronischen Komponenten des Funkschlüssels gekoppelt, wie in den oben bezeichneten Druckschriften beschrieben. Außerdem weist der mobile Funkschlüssel eine Schlüssel-Sende-Empfangseinrichtung für eine drahtlose hochfrequente elektromagnetische Kommunikation auf, die auf dieselbe Kommunikationsfrequenz wie die fahrzeugseitige zugehörige Fahrzeug-Sende-Empfangseinrichtung angepasst ist.

Das erfindungsgemäße Verfahren sieht vor, dass eine Sensoreinrichtung am Fahrzeug in einen energiesparenden, passiven Zustand versetzt wird. Im einfachsten Fall wird die Sensoreinrichtung am Fahrzeug beispielsweise am Türgriff oder im Heckbereich komplett abgeschaltet. Es ist jedoch auch möglich, einen weckfähigen, energiereduzierten Zustand einzuschalten. Jedenfalls ist in diesem passiven Zustand die Sensoreinrichtung nicht sensierungsfähig. Diese Abschaltung erfolgt über eine zentrale Steuereinrichtung am Fahrzeug, welche auch die bidirektionale Kommunikation im hochfrequenten Bereich mit dem Funkschlüssel überwacht oder steuert.

Als weiterer Schritt erfolgt das aus dem Stand der Technik bekannte Abfragen der Umgebung im niederfrequenten Bereich (Polling). Dieses Polling kann zyklisch mit einer einheitlichen Periodendauer oder mit variablen Zeitabständen erfolgen. Beispielsweise ist ein Polling mit einer Frequenz von 100 Hz möglich.

Beim Eintritt des Funkschlüssels in eine nähere Umgebung des Kraftfahrzeuges, in welcher das niederfrequente Signal ausreichend stark ist, wird dieses niederfrequente Signal im mobilen Funkschlüssel empfangen. Das Signal wird als Wecksignal erkannt und in Abhängigkeit von dem Signal wird im Funkschlüssel eine hochfrequente Kommunikation mit dem Fahrzeug gestartet. Grundsätzlich können im Funkschlüssel an dem niederfrequenten Signal Prüfungen vorgenommen werden, um einen Dateninhalt des Signals zu dekodieren. Die hochfrequente nachfolgende Kommunikation mit dem Fahrzeug verifiziert, ob der Funkschlüssel berechtigt ist, einen Zugang zum Fahrzeug zu gewähren. Ein solcher Funkdialog ist aus den bisherigen passiven Zugangssystemen bekannt.

In Abhängigkeit von diesem Dialog wird erfindungsgemäß die Sensoreinrichtung aus dem passiven, nicht sensierungsfähigen Zustand geweckt und in einen sensierungsfähigen Zustand versetzt. Die am Fahrzeug befindliche Sensoreinrichtung wird also nur dann aktiviert, wenn über das Abfragesignal ein Funkschlüssel in der Fahrzeugumgebung geweckt wurde und auf Fahrzeugseite die Anwesenheit des Schlüssels detektiert wurde. Dies führt dazu, dass der Energiebedarf der fahrzeugseitigen Sensoreinrichtungen erheblich reduziert wird, da diese nicht pausenlos mit Energie versorgt werden.

Die Zuschaltung oder Aktivierung der Sensoren erfolgt fahrzeugseitig von einer zentralen Steuereinrichtung aus. Die Aktivierung kann beispielsweise über Freigabe oder aktive Zuschaltung einer Spannungsversorgung erfolgen, es kann jedoch auch alternativ eine Schaltung der Sensoreinrichtung mit einem Steuereingang versehen sein, über welchen ein Mikroprozessor in der Sensoreinrichtung geweckt und von der Steuereinrichtung des Fahrzeuges angesteuert wird.

Gemäß der Erfindung befinden sich die Sensoreinrichtungen zu der Zugriffsdetektion am Fahrzeug gegenüber dem Stand der Technik wesentlich länger in einem abgeschalteten oder energiereduzierten Zustand. Nur wenn die Anwesenheit eines Benutzers in der unmittelbaren Umgebung erfasst wird und dieser einen legitimen Funkschlüssel mit sich führt, werden die Sensoreinrichtungen zur Annäherungs- und Zugriffsdetektionen aktiviert.

Die gezielte Zuschaltung eines solchen Sensors hat neben der grundsätzlich erzielten Energieeinsparung außerdem den Vorteil, dass unnötige Rechenaktivitäten und Funkkommunikationen unterbunden werden. Greift beim herkömmlichen System eine Person an den Türgriff eines Fahrzeuges an, auch wenn der legitime Benutzer mit dem Funkschlüssel sich weit vom Fahrzeug entfernt befindet, wird diese Betätigung und dieser Zugriff auf den Türgriff detektiert. Eine solche Signalverarbeitung wird vermieden, wenn in solchen Situationen die Sensoreinrichtung gar nicht erst aktiviert wird, sondern nur dann aktiviert wird, wenn der Benutzer mit dem Funkschlüssel in der Umgebung erkannt wurde.

Auch bei einer anderen Ausführungsform, bei welcher sich die Sensoreinrichtung im Heckbereich und zur Ansteuerung einer Heckklappe befindet, führt die Erfindung zu einer Reduzierung des Energiebedarfs sowie der Vermeidung von unnötigen Signalverarbeitungen.

Gemäß der Erfindung sind beliebige Sensorkonzepte als fahrzeugseitige Sensoreinrichtungen einsetzbar, sofern sich diese durch Stilllegung in einen energiereduzierten Zustand versetzen lassen, insbesondere kapazitive Sensoren, induktive Sensoren oder auch optische Sensoren.

Die Erfindung wird nun anhand der beiliegenden Figur näher erläutert.

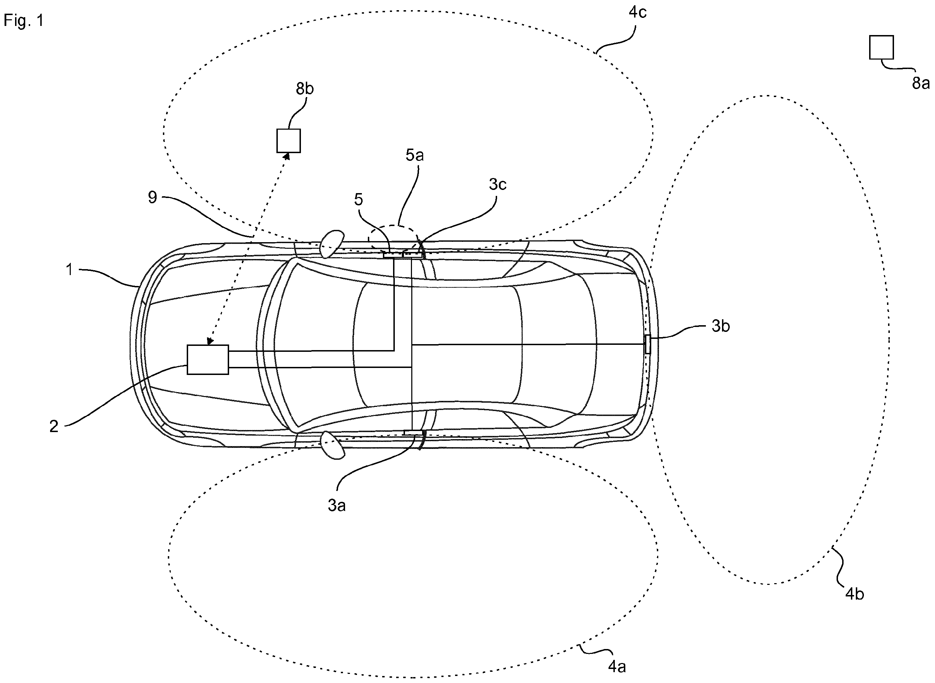

Figur 1 zeigt schematisch die Wirkung des erfindungsgemäßen Betriebsverfahrens;

In Figur 1 ist ein Fahrzeug 1 gezeigt. Das Fahrzeug weist eine Steuereinrichtung 2 auf, die mit Sendespulen 3a, 3b, 3c zum Aussenden von niederfrequenten Wecksignalen gekoppelt ist. Die Sendespulen 3a, 3b, 3c sind an der Außenhaut des Fahrzeuges zur Abstrahlung von Signalen in das Fahrzeug angeordnet. Die Spulen sind in diesem Ausführungsbeispiel an den Griffen der Fahrertür und Beifahrertür angeordnet sowie im Heckbereich.

In Figur 1 sind außerdem die Wirkungsbereiche 4a, 4b, 4c der jeweiligen Signale der Sendespulen 4a, 4b, 4c gezeigt. Die Spule 3a sendet ein niederfrequentes Wecksignal aus, welches im Bereich 4a eine detektionsfähige Stärke hat. Entsprechendes gilt für den Bereich 4b zu der Spule 3b und für den Bereich 4c zu der Spule 3c.

Außerdem weist die Steuereinrichtung 2 eine Kopplung mit einem Annäherungssensor 5 auf. Der Annäherungssensor 5 ist in diesem Beispiel als kapazitiver Sensor ausgebildet und erfasst in einem begrenzten Detektionsbereich 5a die Annäherung der Hand eines Benutzers an einen Fahrzeugtürgriff. In diesem Beispiel ist nur ein einziger Annäherungssensor 5 zu einer Fahrzeugtür gezeigt, es können jedoch mehrere Annäherungssensoren der Art des Annäherungssensors 5 am Fahrzeug angeordnet sein.

Der Annäherungssensor 5 ist von der Steuereinrichtung 2 in einen Standby-Modus versetzt, in dem die Energieaufnahme des Annäherungssensors 5 reduziert oder gänzlich verschwindend ist. In diesem Beispiel ist der Annäherungssensor 5 mit der Sendespule 3c in einer Baugruppe eines Fahrzeugtürgriffs integriert. Dieser Aufbau von Türgriffen, bei denen in einer umgreifbaren Handhabe eine Sendeantenne und ein kapazitiver Näherungssensor angeordnet sind, ist in der Technik bekannt. Der Sensor und die Spule sind jedoch getrennt ansteuerbar, so dass der Sensor in einen Ruhezustand versetzt werden kann.

Beabstandet zu dem Fahrzeug ist ein mobiler Funkschlüssel 8a, 8b vorgesehen. Die Bezeichnungen 8a und 8b zeigen denselben Funkschlüssel in zwei verschiedenen Positionen gegenüber dem Fahrzeug. Befindet sich der Funkschlüssel in der Position des Funkschlüssels 8a so erreicht ihn keines der Wecksignale der Sendeantennen 3a, 3b, 3c. Der Funkschlüssel 8a befindet sich nicht in einem der Bereiche 4a, 4b, 4c in welchem die Signalstärke der niederfrequenten Wecksignale ausreichen würde, um den Funkschlüssel 8a aus seinem Standby-Modus zu wecken.

Nähert sich ein Benutzer mit dem Funkschlüssel dem Fahrzeug an und bewegt diesen beispielsweise in die Position 8b, so kann der Funkschlüssel in der Position 8b durch die Signale in dem Bereich 4c geweckt werden. Bis zu diesem Zeitpunkt ist die Sensoreinrichtung 5 abgeschaltet, so dass der Erfassungsbereich 5a nicht überwacht wird.

Der geweckte Funkschlüssel 8b aktiviert jedoch eine im Funkschlüssel integrierte Schlüssel-Sende-Empfangseinrichtung für hochfrequente elektromagnetische Signale und nimmt darüber eine hochfrequente Funkkommunikation 9 mit einer Fahrzeug-Sende-Empfangseinrichtung auf, die in der Steuereinrichtung 2 integriert ist und legimitiert sich als Funkschlüssel für das Fahrzeug 1. Ist diese Autorisierung erfolgt, schaltet die Steuereinrichtung 2 den Annäherungssensor 5 aktiv, so dass der Bereich 5a für Annäherungen durch den Benutzer überwacht wird. Auf diese Weise ist die Energieaufnahme des Annäherungssensors 5 nur in solchen Fällen signifikant, in denen sich tatsächlich ein Funkschlüssel 8b in einem Umfeld des Fahrzeuges 1 befindet. Außerdem ist in diesem Beispiel vorgesehen, zunächst die Legitimation des Funkschlüssels zu prüfen, so dass nur bei einem Benutzer mit einem legitimen Funkschlüssel überhaupt eine Aktivierung des Annäherungssensors 5 erfolgt.

Grundsätzlich können mehrere unterschiedliche Annäherungssensoren am Fahrzeug vorgesehen sein, die auch je nach Lage und Entfernung durch die Steuereinrichtung eingeschaltet werden können.

## Patentansprüche

1. Verfahren zum Betreiben eines passiven Zugangssystems für ein Fahrzeug (1), wobei am Fahrzeug eine Fahrzeug-Sendeeinrichtung (3a, 3b, 3c) zum Aussenden drahtloser niederfrequenter elektromagnetischer Signale und eine Fahrzeug-Sende-Empfangseinrichtung (2) für drahtlose hochfrequente elektromagnetische Signale angeordnet ist und wobei ein mobiler Fahrzeugschlüssel (8a, 8b) mit einer Schlüssel-Empfangseinrichtung für drahtlose niederfrequente elektromagnetische Signale und eine Schlüssel-Sende-Empfangseinrichtung für drahtlose hochfrequente elektromagnetische Signale vorgesehen ist,
wobei am Fahrzeug (1) wenigstens eine Sensoreinrichtung (5) zum Erfassen einer Annäherung eines Benutzers an eine Fahrzeugtür angeordnet ist,
mit den Schritten,
Versetzen der Sensoreinrichtung (5) am Fahrzeug in einen passiven, nicht-sensierungsfähigen Zustand mit reduzierten Energiebedarf,
Abfragen der Umgebung des Fahrzeugs (1) durch Aussenden wiederholter Wecksignale (4a, 4b, 4c) mit der Fahrzeug-Sendeeinrichtung (3a, 3b, 3c) zum Aussenden drahtloser niederfrequenter elektromagnetischer Signale,
Empfangen des Wecksignals im mobilen Fahrzeugschlüssel (8b) mit der Schlüssel-Empfangseinrichtung für drahtlose niederfrequente elektromagnetische Signale und Initiieren eines Verifizierungsdialogs (9) zwischen der Schlüssel-Sende-Empfangseinrichtung für drahtlose hochfrequente elektromagnetische Signale und der Fahrzeug-Sende-Empfangseinrichtung für drahtlose hochfrequente elektromagnetische Signale,
Versetzen der Sensoreinrichtung (5) am Fahrzeug in einen aktiven, sensierungsfähigen Betriebszustand in Abhängigkeit von dem Verifizierungsdialog,
wobei die Sensoreinrichtung am Fahrzeug aus dem aktiven Zustand erneut in den passiven, nicht-sensierungsfähigen Zustand mit reduzierten Energiebedarf versetzt wird, wenn für eine vorgegebene Zeitdauer keine Betätigung sensiert wird.

2. Verfahren nach Anspruch 1, wobei die Sensoreinrichtung einen kapazitiven Sensor aufweist, welcher die Annäherung einer Hand eines Benutzers an einen Türgriff erfasst.

3. Verfahren nach Anspruch 1, wobei die Sensoreinrichtung einen kapazitiven Sensor zur Ansteuerung einer Heckklappe des Fahrzeugs aufweist, welcher die Annäherung und Bewegung eines Körperteils eines Benutzers im Bereich des heckseitigen Stossfängers erfasst.

4. Verfahren nach Anspruch 1, wobei die Sensoreinrichtung einen optischen Sensor aufweist, welcher die Annäherung einer Hand eines Benutzers an einen Türgriff erfasst.

5. Verfahren nach einem der vorangehenden Ansprüche, wobei der Verifizierungsdialog eine Zuordnung des Fahrzeugschlüssels zu dem Fahrzeug überprüft.

## Claims

1. Method for operating a passive access system for a vehicle (1), wherein an onboard transmitting device (3a, 3b, 3c) for transmitting wireless low-frequency electromagnetic signals and an onboard transceiver device (2) for wireless high-frequency electromagnetic signals are arranged on the vehicle, and wherein a mobile vehicle key (8a, 8b) with a key-receiver device for wireless low-frequency electromagnetic signals and a key transceiver device for wireless high-frequency electromagnetic signals are provided,
wherein at least one sensor device (5) is arranged on the vehicle (1) for detecting an approach to a vehicle door by a user,
comprising the steps of
placing the sensor device (5) on the vehicle in a passive, non-sensing state with reduced energy requirement,
scanning the area surrounding the vehicle (1) by emitting repeated wake-up signals (4a, 4b, 4c) with the onboard transmitting device (3a, 3b, 3c) for transmitting wireless low-frequency electromagnetic signals,
receiving the wake-up signal in the mobile vehicle key (8b) with the key receiver device for wireless low-frequency electromagnetic signals and initiating of a verification dialogue (9) between the key transceiver device for wireless high-frequency electromagnetic signals and the onboard transceiver device for wireless high frequency electromagnetic signals,
placing the sensor device (5) on the vehicle in an active, sensing-enabled operating state depending on the verification dialogue,
wherein the sensing device on the vehicle is switched from the active state to the passive, sensing-disabled state with reduced energy requirement again if no actuation is sensed for a predefined period of time.

2. Method according to Claim 1, wherein the sensor device includes a capacitive sensor which detects the approach of a user's hand to a door handle.

3. Method according to Claim 1, wherein the sensor device includes a capacitive sensor for controlling a tailgate of the vehicle, which detects the approach and movement of a user's body part in the region of the rear bumper.

4. Method according to Claim 1, wherein the sensor device includes an optical sensor which detects the approach of a user's hand to a door handle.

5. Method according to any one of the preceding claims, wherein the verification dialogue checks an assignment of the vehicle key to the vehicle.

## Revendications

1. Procédé permettant de faire fonctionner un système d'accès passif pour un véhicule (1), sachant que sur le véhicule est disposé un système d'émission de véhicule (3a, 3b, 3c) pour émettre des signaux électromagnétiques basse fréquence sans fil et un système émission-réception de véhicule (2) pour des signaux électromagnétiques haute fréquence sans fil et sachant qu'une clé de véhicule mobile (8a, 8b) avec un système de réception de clé pour des signaux électromagnétiques basse fréquence sans fil et un système émission-réception codé pour des signaux électromagnétiques haute fréquence sans fil sont prévus,
sachant que sur le véhicule (1) est disposé au moins un système de détection (5) pour saisir une approche d'un utilisateur sur une porte de véhicule,
avec les étapes suivantes,
transposition du système de détection (5) sur le véhicule dans un état passif de non détection avec besoin en énergie réduit,
interrogation de l'environnement du véhicule (1) par émission de signaux d'éveil répétés (4a, 4b, 4c) avec le système d'émission de véhicule (3a, 3b, 3c) pour émettre des signaux électromagnétiques basse fréquence sans fil,
réception du signal d'éveil dans la clé de véhicule (8b) mobile avec le système de réception de clé pour des signaux électromagnétiques basse fréquence sans fil et initiation d'un dialogue de vérification (9) entre le système émission-réception de clé pour des signaux électromagnétiques haute fréquence sans fil et le système émission-réception de véhicule pour des signaux électromagnétiques haute fréquence sans fil,
transposition du système de détection (5) sur le véhicule dans un état de fonctionnement actif, capable de détecter en fonction du dialogue de vérification,
sachant que le système de détection sur le véhicule est transposé de l'état actif à nouveau dans l'état passif de non détection avec besoin en énergie réduit, si aucun actionnement n'est détecté pour une durée de temps prédéfinie.

2. Procédé selon la revendication 1, sachant que le système de détection comporte un capteur capacitif, lequel saisit l'approche d'une main d'un utilisateur sur une poignée de porte.

3. Procédé selon la revendication 1, sachant que le système de détection comporte un capteur capacitif pour commander un hayon du véhicule, lequel saisit l'approche et le mouvement d'une partie du corps d'un utilisateur dans la zone du pare-chocs arrière.

4. Procédé selon la revendication 1, sachant que le système de détection comporte un capteur optique, lequel saisit l'approche d'une main d'un utilisateur sur une poignée de porte.

5. Procédé selon l'une quelconque des revendications précédentes, sachant que le dialogue de vérification vérifie une attribution de clé de véhicule au véhicule.
